# EUROPEAN PATENT SPECIFICATION

(11) **EP 1 967 952 B1**
(45) Date of publication and mention of the grant of the patent: **19.01.2011**
(21) Application number: 08011041.4
(22) Date of filing: 20.05.2005
(51) Int. Cl.: G06F 11/14

(54) **Method and apparatus for storage backup**
Verfahren und Vorrichtung für Speichersicherung
Procédé et appareil de sauvegarde de stockage

(30) Priority: 21.05.2004 US 573586 P
(43) Date of publication of application: 10.09.2008
(62) Divisional of application: 05752274.0
(73) Proprietor: Computer Associates Think, Inc., Islandia, New York 11749 (US)
(72) Inventor: McGrattan, Emma K., Islandia, NY 11749 (US); Ball, Stephen, Islandia, NY 11749 (US); Moucaddem, Sami R., St Laurent, Quebec H04M 2X4 (CA); Rivet, Jean-Francois, St Laurent, Quebec H04M 2X4 (CA); Yang, Frank H., Islandia, NY 11749 (US); Kuo, Chin L., Islandia, NY 11749 (US)
(74) Representative: Dunlop, Hugh Christopher

(56) References cited:
- EP-A- 0 520 459
- EP-A- 0 541 281
- EP-A- 0 899 662
- EP-A- 1 353 273
- WO-A-99/09480
- US-A- 5 943 688
- US-A1- 2003 200 480

## Description

### TECHNICAL FIELD

The present disclosure relates generally to the field of storage backup. More particularly, the present disclosure relates to data storage backup to a database.

### DESCRIPTION OF THE RELATED ART

Disasters, such as fires, floods, power outages, terrorist attacks, natural disasters, etc., can severely interrupt the functioning of an organization and cause it to lose money, time and business. Enterprises and individuals who use computers that contain critical data, need disaster recovery plans in place in the event of a disaster, in order to safeguard vital information stored on the computers. Even in non-disaster situations, in which users may just want to archive their information, it is beneficial to implement "backup" and recovery plans.

Typically, users backup their information systems in order to protect the data and information in the system. A backup involves the copying or printing of the contents of a hard disk to another storage medium, often located at a remote location. Complete or partial backups can be performed for archival purposes and/or data recovery in the case of system failure. A complete backup is a full backup of the entire system, including drives, directories and files. A partial backup can be either differential, in which all of the files that were changed since the last complete backup are considered, or incremental, in which all of the files that were changed since the last backup are considered, or user-defined, in which only sets of files specified by a user are considered.

However, these backup methods suffer from various drawbacks. For example, both the complete and incremental methods cause redundant data to be backed up and stored, thereby unnecessarily consuming additional storage space.

Conventionally, data is backed up onto either tapes, CDs, DVDs, or disks. Backup of critical data is typically, periodically or otherwise regularly, performed by streaming the data at a steady high speed rate. Each backup by a conventional system creates a distinct and complete copy of the data, generally without referring to other backups. Therefore, conventional backup systems often cause redundant data to be backed up and stored, thereby unnecessarily consuming additional storage space. Such unnecessary consumption, of storage space has associated inefficiencies of time as well as cost. For example, when restoring or recovering data, conventional methodologies consume significant amounts of time. When the backup data to be accessed is stored, for example, on tape, data on the backup tape is read and processed sequentially, a process that takes a relatively long time depending on the number of tapes and the amount of data that is being restored.

Furthermore, conventional methodologies do not always provide comprehensive data protection. For example, using a tape backup (for example, DAT tapes) often provides computer users with a false sense of protection because tape drives may fall out of alignment, especially when the data backups are frequent. In other words, the recording track changes positions when it writes to the tape, requiring users to continuously check the condition of the tape drive, a process that not all users remember or even have the time to do. In addition to the problem of alignment, tapes suffer from additional problems in that they can become damaged, corrupted, or even accidentally or intentionally overwritten.

Ideally, data should be backed up frequently and restored rapidly from backup after a system failure. However, as the amount of information increases, it becomes more difficult to maintain the frequency of data backups and promptly restore the data from a particular point in time after a system failure, if conventional methods are used.

Accordingly, a need exists for techniques that overcome the disadvantages of conventional data storage techniques. It would be beneficial to have methods and systems for optimum backup of data and timely and efficient restoration of backup data.

EP 0541281 discusses a facility for storing in a backup memory only those blocks of a file, or disk partition, which differ from corresponding blocks forming an earlier version of the file. A file is divided into a number of blocks and a "signature" is generated for each such block. A block is then stored in the backup memory only if its associated signature differs from a signature generated for an earlier version of the block.

EP 1353273 discusses a technique for restoring data on a primary data volume by generating an image of the primary data volume at a specified point-time based on data stored on a backup data volume, where the data stored on the backup data volume includes data written to the primary data volume and stamps to indicate when the data was written to the primary data volume. The primary data volume is restored based on the generated image of the primary data volume.

WO 99/09480 discusses a method for backing-up files stored on remote computers to a central computer. The method includes storing a file list in a memory device accessible to the central computer. The file list contains multiple records which each correspond to a file stored at some time on one or more of the remote computers. Each record includes file identification data which identifies a respective file and includes a signature of the respective file.

EP 0520459 discusses a method and apparatus for providing an historical perspective into a database of information objects through an efficient method and apparatus for versioning information objects stored in a database as well as an index representative of the information objects is disclosed. The latest versions of each one of the information objects and each one of the entries in the index are maintained in the database. Partial earlier versions of each one of the information objects and each one of the index entries are stored with the latest versions. The partial versions contain only sufficient information about the differences between the earlier versions and the later ones so that any earlier version may be reconstructed. Identification tags are employed as unique identifiers for each one of the plurality of information objects and for different versions of the information objects.

### SUMMARY

According to one aspect, the present invention provides a method for restoring backup data from a database as set out in claim 1.

According to a further aspect, the present invention provides an apparatus for restoring backup data from a database as set out in claim 10.

A method for backing up data includes breaking down a specified data set to be backed up into a plurality of data blocks, generating for each data block a corresponding data block digest and associating the data block digest with the data block, and storing the data block and the associated generated data block digest in a database.

A method for restoring backup data from a database, with the backup data being stored in the database as a plurality of data blocks includes receiving specification of a time to which data restoration is desired, comparing the specified time to timestamp information stored for each data block of the backup data in the database, and retrieving a selected data block of the backup data, if the selected data block has an associated timestamp at or earlier than the specified time and no other data blocks of the backup data which correspond to the selected data block have more contemporaneous timestamps between the specified time and the associated timestamp of the selected data block.

A method for restoring backup data from a database includes retrieving timestamp information for a group of corresponding data blocks in the backup data from a database catalog, comparing the timestamp information for the data blocks in the group, selecting a data block in the group having the most recent timestamp as compared to the other corresponding data blocks in the group, and restoring the data block having the most recent timestamp.

An apparatus for backing up data to a database includes means for breaking down a specified data set to be backed up into a plurality of data blocks, means for generating for each data block a corresponding data block digest and associating the data block digest with the data block, and means for storing the data block and the associated generated data block digest in a database.

An apparatus for restoring backup data from a database, with the backup data being stored in the database as a plurality of data blocks includes means for receiving specification of a time to which data restoration is desired, means for comparing the specified time to timestamp information stored for each data block of the backup data in the database, and means for retrieving a selected data block of the backup data, if the selected data block has an associated timestamp at or earlier than the specified time and no other data blocks of the backup data which correspond to the selected data block have more contemporaneous timestamps between the specified time and the associated timestamp of the selected data block.

An apparatus for restoring backup data from a database includes means for retrieving timestamp information for a group of corresponding data blocks in the backup data from a database catalog, means for comparing the timestamp information for the data blocks in the group, means for selecting a data block in the group having the most recent timestamp as compared to the other corresponding data blocks in the group, and means for restoring the data block having the most recent timestamp.

### BRIEF DESCRIPTION OF THE DRAWINGS

The features of the present application can be more readily understood from the following detailed description with reference to the accompanying drawings wherein:
Fig. 1 shows a flow chart of a method for backing up data to a database, according to one embodiment of the present application;
Fig. 2 shows a flow chart of a method, according to one embodiment of the present application, for restoring backup data from a database;
Fig. 3 shows a flow chart of a method for restoring backup data from a database, according to another embodiment of the present application.
Fig. 4 shows a block diagram of an exemplary computer system capable of implementing the methods and apparatuses of the present application;
Figs. 5A-5C show schematic diagrams illustrating the technique of breaking down a specified data set to be backed up into a plurality of data blocks and generating and assigning for each of the data blocks an associated data block digest, according to one exemplary embodiment of the present application.
Fig. 6 shows a block diagram illustrating a system for backing up data to a database, according to one embodiment of the present application;
Fig. 7 shows a schematic diagram illustrating the data format of metadata associated with a data block instance which is stored in a database catalog, according to one embodiment of the present application;
Fig. 8 shows a schematic diagram illustrating entries stored in a database catalog and entries stored in a database, according to one embodiment of the present application;
Fig. 9 shows a schematic diagram illustrating operations by which only changed data blocks are.saved in a backup, according to one embodiment of the present application; and
Fig. 10 shows a schematic diagram illustrating operations by which only changed data blocks are saved in a backup, according to an alternate embodiment of the present application.

### DETAILED DESCRIPTION

This application provides tools (in the form of methodologies, apparatuses, and systems) for backing up data to a database and/or for restoring backup data from a database. The tools may be embodied in one or more computer programs stored on a computer readable medium or program storage device and/or transmitted via a computer network or other transmission medium.

The following exemplary embodiments are set forth to aid in an understanding of the subject matter of this disclosure, but are not intended, and should not be construed, to limit in any way the invention as set forth in the claims which follow thereafter. Therefore, while specific terminology is employed for the sake of clarity in describing some exemplary embodiments, the present disclosure is not intended to be limited to the specific terminology so selected, and it is to be understood that each specific element includes all technical equivalents which operate in a similar manner.

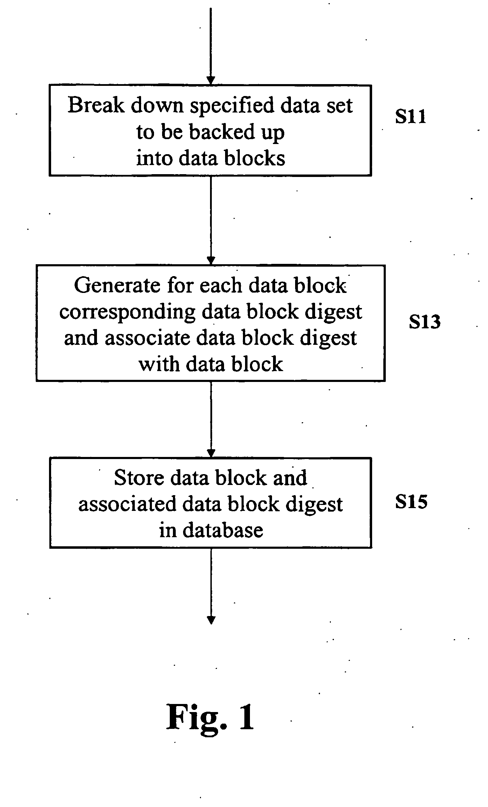

A method for backing up data, according to one embodiment, will be described with reference to Fig. 1. A specified data set is broken down into a plurality of data blocks (Step **S11**). For each of the data blocks, a corresponding data block digest is generated and associated with the data block (Step **S13**). The data block and the associated data block digest are stored in a database (Step **S15**). The data blocks may have a fixed size and typically are stored in the database with associated timestamp information.

A backup refresh of the specified data set can be performed after the data set has been backed up. In a refresh operation, a new data block digest of a selected data block in the specified data set to be refreshed is determined and then compared with the stored data block digest of the associated data block in the database which corresponds to the selected data block. The selected data block and the new data block digest in the database are backed up if the new data block digest of the selected data block does not equal the stored data block digest of the associated data block in the database (that is, the content of the data block changed). If the selected data block is backed up in the database, the selected data block replaces the associated data block in the database as a current version of the data block.

The data to be backed up can optionally be preselected by a user and arranged into an object set. The object set (or any other entity including data, such as, a fileset, datastream, e-mail, database, etc.) may be referenced by a set identifier and can contain a plurality of data objects. Each data object typically has an associated object identifier and an object name. For each instance of a data object, object identifier and timestamp information are stored as metadata in a database catalog.and attribute information is stored in the database. Furthermore, for each data object, an object map is generated which can include object identifier, timestamp, data block number, block identifier and data block digest information. The data block digest and the data block number information can be stored in the database, and the object identifier, timestamp and block identifier information may be stored as metadata in a database catalog.

When requested, a data object can be deleted. When a data object is requested to be deleted, the data object is flagged as deleted in the database catalog, and the data blocks of the data object and object maps corresponding to the data object remain in the database until requested to be permanently deleted.

The method for backing up data can also include comparing the generated data block digest for a selected data block in the specified data set to be backed up on the one hand, and on the other hand, data block digests of backed up data blocks stored in the database, to determine whether the selected data block is already backed up. If the generated data block digest is not equal to any of the data block digests of the backed up data blocks stored in the database (that is, the data block has not already been backed up), then the selected data block and the generated data block digest are stored in the database.

A secondary backup of the specified data set can optionally be performed to a secondary backup medium after the data set has been backed up.

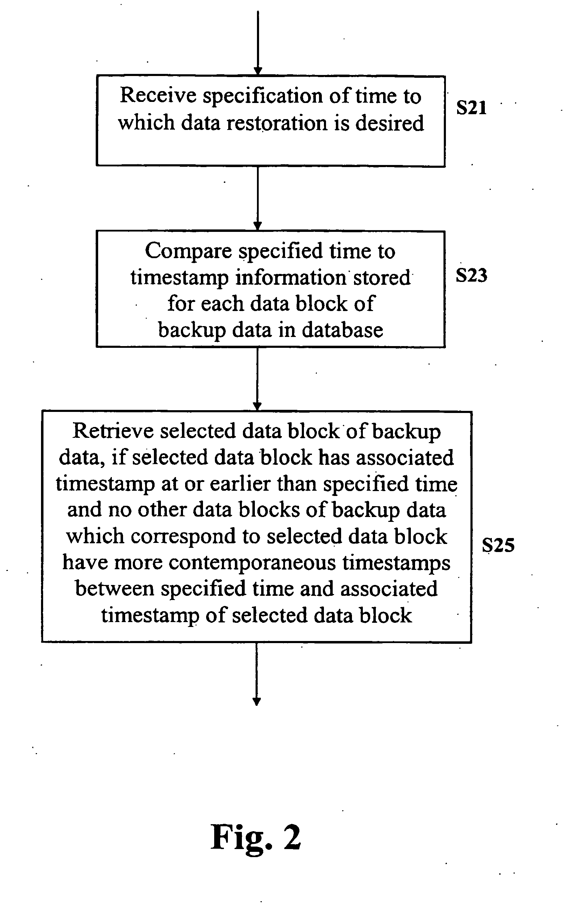

A method for restoring backup data from a database, according to one embodiment, will be described with reference to Fig. 2. The backup data is stored in the database as a plurality of data blocks. Each data block is typically stored with associated timestamp information in the database. A specification of a time to which data restoration is desired is received (step **S21**). The specified time is compared to timestamp information stored (step **S23**) for each of the data blocks of the backup data in the database. A selected data block of the backup data is retrieved if the selected data block has a timestamp at or earlier than the specified time and no other data blocks of the backup data which correspond to the selected data block have more contemporaneous timestamps between the specified time and the associated timestamp of the selected data block (step **S25**). The backup data is typically retrieved from the database and the stored timestamp information can be stored in a database catalog. A backup of the restored backup data can be performed to a secondary backup medium.

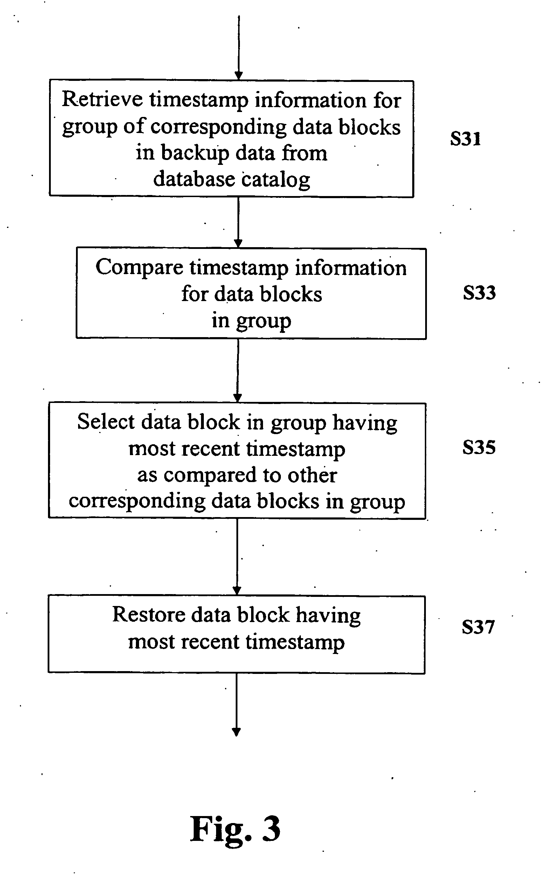

A method for restoring backup data from a database according to another embodiment, will be described with reference to Fig. 3. The backup data is stored in the database as a plurality of data blocks. Timestamp information for a group of corresponding data blocks in the backup data is retrieved from a database catalog (step **S31**). The timestamp information for the data blocks in the group is compared (step **S33**) and a data block in the group having the most recent timestamp as compared to other corresponding data blocks in the group is selected (step **S35**). The data block having the most recent timestamp is restored (step **S37**). Each of the data blocks with the most recent timestamp can be grouped by object set and each data block within each object set can be ordered by block number.

The specific embodiments described herein are illustrative, and many variations can be introduced on these embodiments without departing from the scope of the appended claims. Elements and/or features of different illustrative embodiments may be combined with each other and/or substituted for each other within the scope of this disclosure and appended claims.

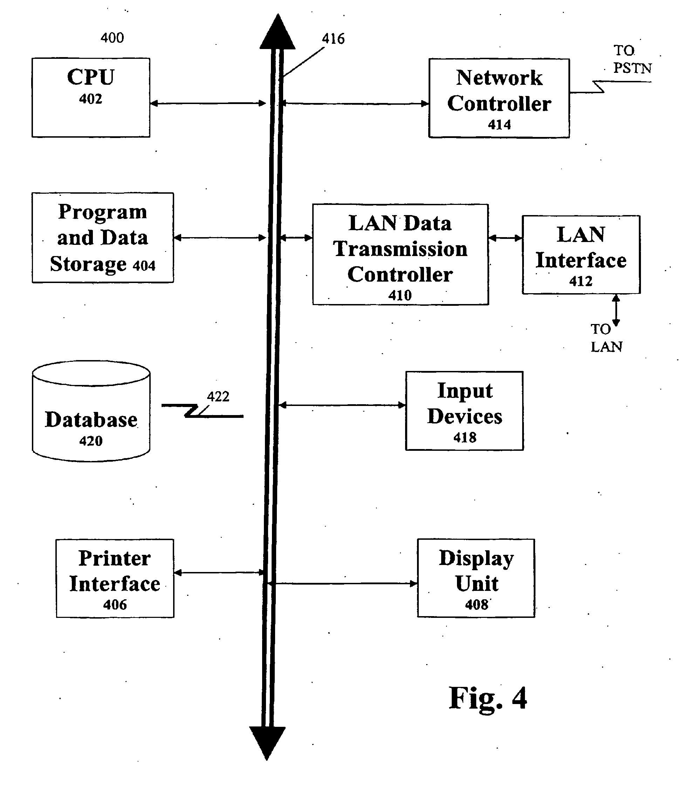

For example, Fig. 4 shows an example of a computer system **400** which may implement the methods and apparatuses of the present disclosure. The methods and apparatuses of the present disclosure may be implemented in the form of a software application running on a computer system, for example, a mainframe, personal computer (PC), handheld computer, server, etc. The software application may be stored on a recording media locally accessible by the computer system, for example, floppy disk, compact disk, hard disk, etc., or may be remote from the computer system and accessible via a hard wired or wireless connection to a network, for example, a local area network, or the Internet.

The computer system **400** can include a central processing unit (CPU) **402,** program and data storage devices **404,** a printer interface **406,** a display unit **408,** a (LAN) local area network data transmission controller **410,** a LAN interface **412,** a network controller **414,** an internal bus **416,** and one or more input devices **418** (for example, a keyboard, mouse etc.). As shown, the system 400 may be connected to a database **420,** via a link **422.**

In general, databases allow for easy integration and manipulation of data. A database typically includes information known as "metadata" which describes (for example, the structure or other characteristics of) associated data in the database. This metadata (for example, timestamp information) is stored in data tables that are similar to (but typically separate from) the data tables that hold the associated data.

The problems encountered by conventional backup systems and methodologies can be avoided through the methods and apparatuses of the present application, more specifically, through backup to a database ("BTD") as a repository for the data (instead of media such as, CDs, DVDs, disks, tapes, etc.). BTD technology performs backup of data to a database, and the stored data includes metadata which describes the backup data. The database preferably is of high performance and contains enough capacity to store all of the data to be backed up.

The utilization of a database for backup allows for storage optimization by storing only one copy of each unique data block in the database. When the content of a data block changes, the backup can be updated with a new instance of the data block. Thus, a data block may have multiple, associated instances in the backup data. Each instance of a data block has an associated data block digest. The data block digest corresponds to the data content of the data block instance, and is substantially unique to that data content. Before a new instance of a data block is stored in the database, the unique data block digest of the data block instance is compared to the data block digest of any instances of the data block already stored in the database, to determine any redundancies.

A data block instance has associated metadata, including timestamp information as an additional dimension to the data. The timestamp information identifies the data and time of creation and/or modification associated with the data block instance and allows the system to distinguish between older and more recent instances of a data block. The timestamp information can be used for reconstruction or recovery of virtual point-in-time copies of the data, for example, for data analysis.

Furthermore, the speed of data recovery is facilitated by the indexing feature of the database, a characteristic which is not present in conventional backup systems or media.

Data to be backed up is broken down into block level increments which are suitable for backup to a database and then stored. There are many advantages to storing, and referring, to the data on a block level, including the ability, when the stored data is corrupted in part, to step incrementally through uncorrupted data blocks up to the corrupted data block. Use of a database as a repository for backup data coupled with a time stamping feature for the data on a data block level facilitates novel backup methodologies which use block level incremental backup and recovery.

One of the steps in the BTD process is to convert the data in a specified data set to be backed up into a plurality of data blocks, and generate and assign to a data block an associated data block digest, according to the data content of the block. If a block in the data to be backed up ("candidate block") is identical to a corresponding backed up data block, the candidate block has the same data block digest as the corresponding data block to which it is identical, and the BTD system does not store the candidate block in the database. Instead, the metadata for the corresponding backed up data block is updated, including adding a timestamp associated with the candidate block, to reflect the fact that the backed up data block is identical to the later candidate block.

If the candidate block is different from the corresponding backed up block, the newly generated data block digest is assigned to the candidate block and the candidate block is stored, with timestamp, as an additional instance of the backed up data block in the database. For example, during an initial backup, data block XYZ may be assigned data block digest "dXYZ" based on the data contained in the data block. However, if during a subsequent backup a candidate block ABC corresponding to data block XYZ is not identical to data block XYZ, the newly generated data block digest "dABC" is assigned to data block ABC, and ABC is associated with block XYZ as an additional instance of the data block.

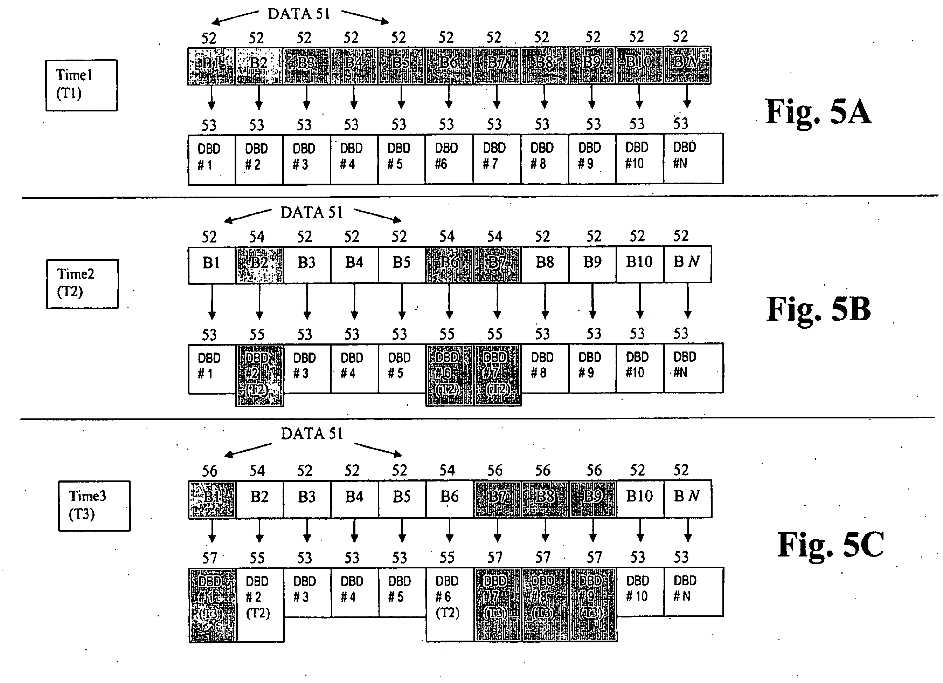

Schematic diagrams illustrating breaking down a specified data set to be backed up into a plurality of data blocks and generating and assigning for each of the data blocks an associated data block digest, according to an exemplary embodiment, are shown in Figs. 5A-5C. At time #1 (Fig. 5A), a "remember" operation is performed. Data **51** at instance **52** is broken down into a plurality of data blocks B1, B2, ...BN. Data block digests 5**3** are generated for the data blocks B1, B2, ... BN at instance 5**2** and assigned to the data blocks. Thus, data block digests DBD#1, DBD#2, ... DBD#N are associated with blocks B1, B2, ... BN, respectively. The data blocks and the data block digests are stored in the database.

Time #2 illustrates the creation of new instances of a data block. At time #2 (Fig. 5B), a "refresh" operation is performed. The backup of data 5**1** is updated with changes occurring in blocks B2, B6, and B7 at instance 5**4**. Therefore, new data block digests DBD#2 (T2), DBD#6(T2) and DBD#7 (T2) are generated and assigned for the modified data blocks instance 5**4**, while the data block digests for the unmodified data blocks at instance 52 remain the same. In this situation, only the modified data block instances 5**4** and their respective data block digests are added to the backup in the database.

At time #3 (Fig. 5C), an additional refresh operation is performed. The backup of data 5**1** is updated again, with changes occurring in data blocks B1, B7, B8 and B9 at instance 5**6.** Here, new data block digests DBD#1 (T3), DBD#7 (T3), DBD#8 (T3) and DBD#9 (T3) are generated and assigned for the recently modified data block instances 56 of blocks B1, B7, B8 and B9, while the data block digests DBD#3, DBD#4, DBD#5, DBD#10 and DBD#N for the original unmodified data blocks B3, B4, B6, B10 and BN and the data block digests DBD#2 (T2) and DBD#6 (T2) for the modified data blocks B2 and B6 at instance 5**4** at time#2 remain the same. Thus, at time#3, only the data block digests DBD#1 (T3), DBD#7 (T3), DBD#8 (T3) and DBD#9 (T3) and the modified data blocks B1, B7, B8 and B9 at instance 56 are stored in the database.

Unique data block digests can be generated in accordance with a number of existing methods and technologies, such as one-way hashing techniques (for example, BOB ID, MD4, MD5, Haval, SHA-1, block ciphers, etc.).

Each data block instance is associated with timestamp information (including date and time), to keep track of when the data block was created and/or last modified. The availability of timestamp information for each backed up data block instance allows for point in time recovery (rapid recovery).

For example, if a user wants to know what the data looked like at a specific point in time prior to the present version, the user can "flashback" the object to that specific point in time. In other words, the user can query the database regarding the specific point in time, and in response the system rewinds itself to a point in time in the past (by comparing timestamp information to the specific point in time), and retrieve (and, more specifically, reconstruct by using timestamp information) the requested older data.

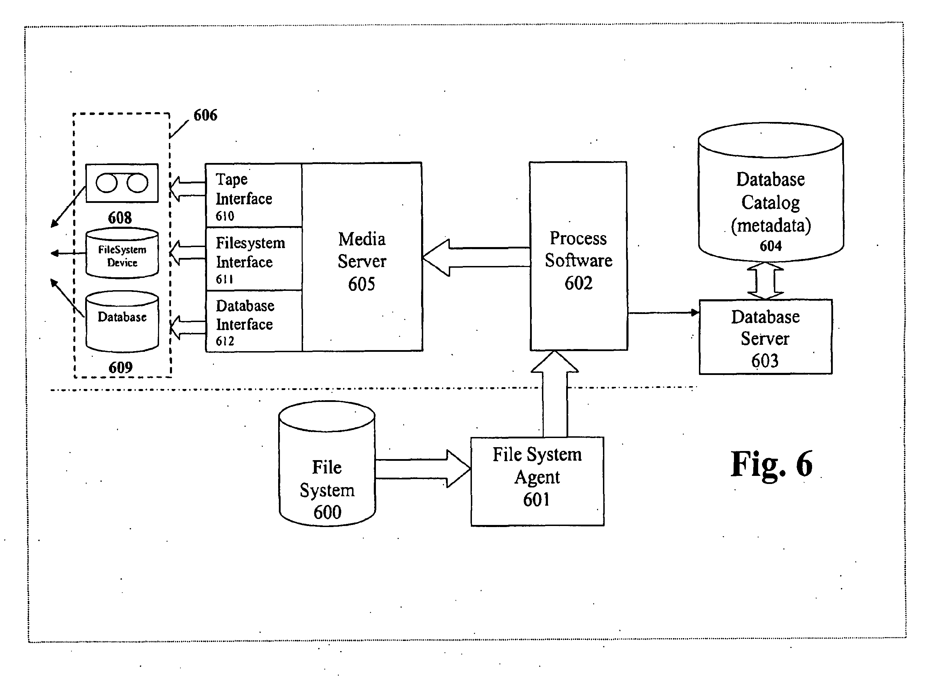

Fig. 6 is a schematic diagram illustrating a system for backing up data to a database according to an embodiment of the present application. Object system 600 contains the objects to be backed up. A user can preselect a set of objects to be backed up collectively. All such selected objects are stored together in an object set which is referenced by a set identifier. Each selected object in the object set also has an associated object identifier and an object name.

Object system agent **601** generates and assigns data block digests for the data blocks from each of the objects to be backed up and sends both the data blocks and the data block digests to process software **602** for further processing corresponding to a requested operation. The supported operations can include, for example, "remember object", "refresh object", "flashback object", "forget object", etc. In "remember object" operations, all the data blocks are stored in the database (e.g., full backup). In "refresh object" operations, only the changed or updated data blocks are stored in the database (e.g., incremental backup). In certain embodiments, the "remember object" and "refresh object" operations are the same operation. In "flashback object" operations, saved data blocks are retrieved from the database based on the timestamp information. In "forget object" operations, a specified object that is no longer required is marked as deleted.

For example, if the requested operation is "remember object", object maps are created for all of the objects in the object set. An object map includes object identifier, timestamp information, and unique block ID. This information is sent to database server **603** to be stored in database catalog **604.** In addition, the data blocks and the generated data block digests are sent to media server **605** to be stored in database **609.**

The media server **605** provides interfaces for different device and media classes, depending on the attached storage devices/media **606,** which include database **609.** An additional feature that is provided with the BTD technology is use of conventional backup media, for example, tape, CD, DVD, disk, etc., or other media components for a secondary backup ("synthetic backup") after backup to the database. This feature may be used for archiving purposes, such as to store particular data for long term purposes, as a supplement to short term access to the stored data in the database. Additional attached storage devices/media **607, 608** allow for these synthetic backups to be performed. By utilizing the ability of database **609** to randomly retrieve data blocks, a backup image is created through the extraction of data blocks based on their timestamp. For example, under some circumstances, the data blocks with the highest timestamps can be retrieved, grouped by their object set, and ordered by block number. The media server **605** receives this information and reads out the listed blocks, forwarding those blocks to the appropriate device/media interface **610, 611, 612.** The device/media interface then sends the information to associated device/media **607, 608** for synthetic backup.

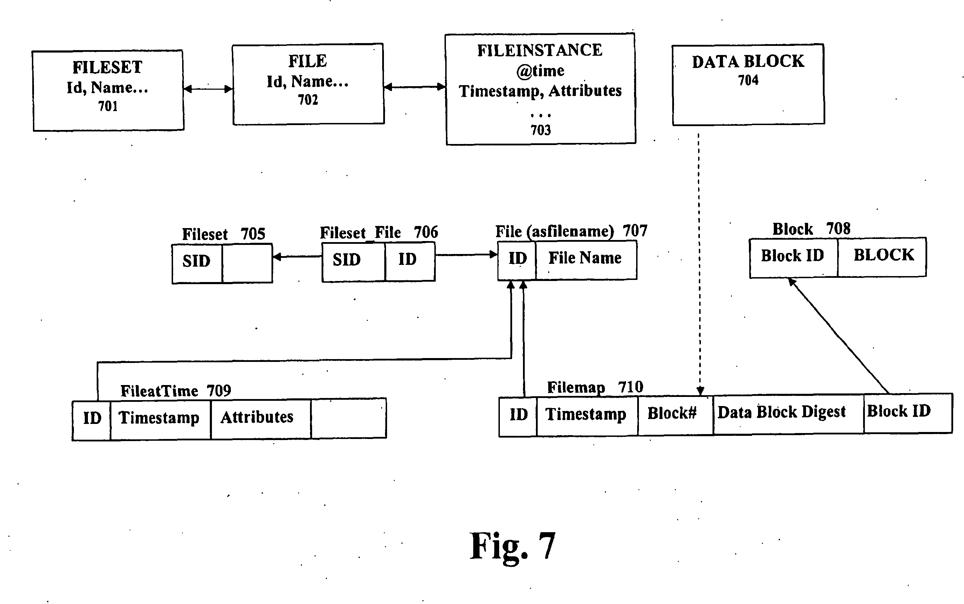

Database server **603** can provide a client interface for database catalog (metadata) **604.** The metadata associated with each data block instance (such as timestamp and attribute information) is stored in database catalog **604** in a format such as illustrated exemplarily in Fig. 7. Object set **701** (e.g., preselected objects for backup) is referenced by an identifier and the objects in object set **702** are referenced by a name and identifier. As explained above, storing redundant data that is already backed up and has not changed unnecessarily consumes valuable storage and is time consuming. Referring to the timestamps of data blocks in the backed up data helps to expedite the (point in time) recovery process. Thus, for every given object instance (data instance), there is an associated timestamp and attribute information **703.** Each object also has an object map that includes the following fields: an object identifier; timestamp; block number; data block digest; and block ID **710.**

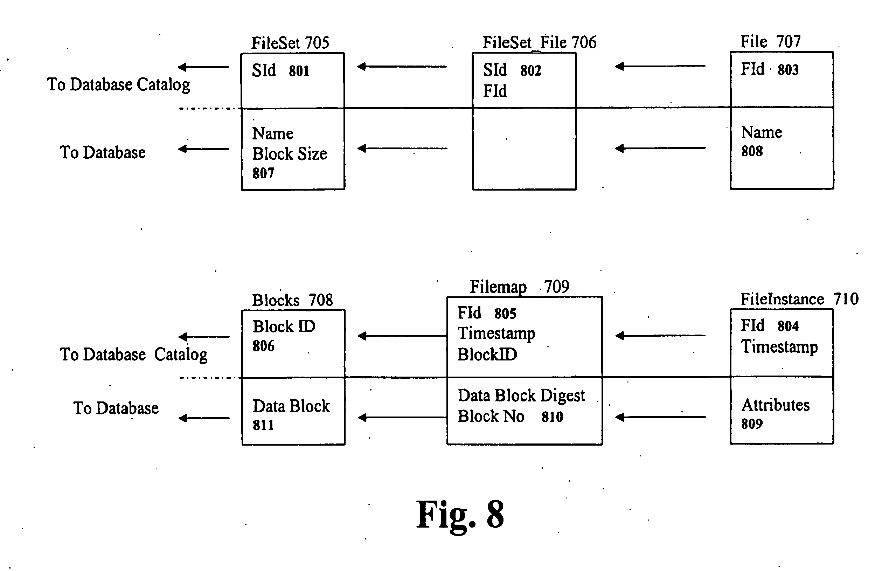

Fig. 8 is a schematic diagram illustrating entries which are stored in database catalog 604 and entries which are stored in database **609.** The items **801, 802, 803, 804, 805,** and **806** in the top row corresponding to objects **705, 706, 707, 708, 709,** and **710** are stored in database catalog **604.** In contrast, the items **807, 808, 809, 810,** and **811** in the bottom row are stored in database **609.**

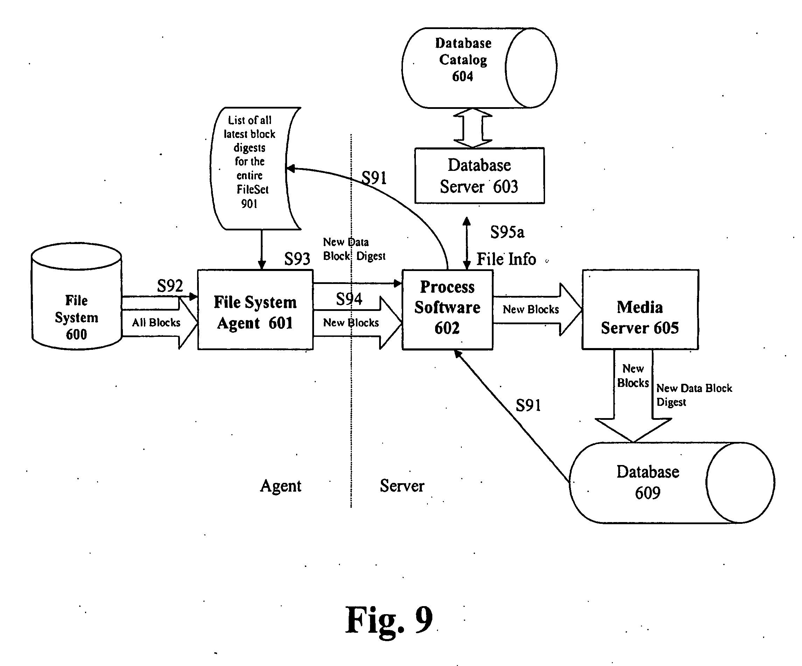

Fig. 9 shows a schematic diagram illustrating operations by which only the changed data blocks are saved in a backup, according to one embodiment of the present application. When a request for the operation "refresh object" is received, process software **602** collects the latest timestamps associated with the objects in the specified object set and correlates them to the data block digests for each data block in each of the objects of the object set (step **S1**). A list of the data block digests for the entire specified object set **901** is compiled and sorted in order of an object system directories walk-through (for example, data block digests are collected block-by-block for each object in the object set, and the collected data block digests are sorted) and is then sent to object system agent **601** (step **S91**). Object attributes are then read from Object system **600** for the object to be "refreshed" (step **S92**). The modification date of the object to be "refreshed" is compared to the timestamp information for the stored objects. If the modification date is higher than the latest timestamp for the object, then the object is read (step **S92**). For every block of size n in the object, a new data block digest is generated and compared against the ones in the list received by object system agent **601** at step 91 (step **S93**). If the data block digests are not equivalent, then the data block and the generated data block digest are both sent to process software **602** (step **S94**). If the data block digests are equivalent, then the data block is dropped and the system proceeds to the next block (step **S94**). Once process software **602** receives the new data blocks, it sends the metadata for the data blocks to database server **603** to be cataloged in database catalog **604** (step **S95b**) and the data block and data block digest are forwarded to media server **605** to be stored in database **609** (step **S95b**).

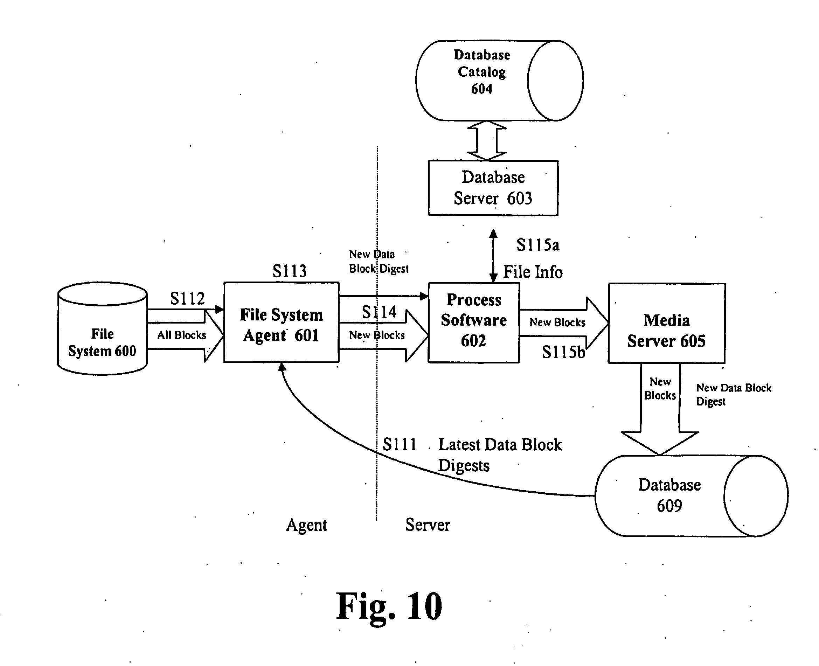

Fig. 10 is a schematic diagram illustrating operations by which only the changed data blocks are saved in a backup, according to an alternate embodiment of the present application. When a request for the operation "refresh object" is received, object system agent connects to database **609** and queries database **609** for the latest data block digests for the data blocks of a given object (step **S111**). Object attributes are then read from object system **600** for the object to be "refreshed" (step **S112**). The modification date of the object to be "refreshed" is compared to the timestamp information for the stored objects. If the modification date is higher than the latest timestamp for the object, then the object is read (step **S112**). For every block of size n in the object, a new block digest is generated and compared against the ones obtained from database **609** at step 111 (step **S113**). If the data block digests are not equivalent, then the data block and the generated data block digest are both sent to process software **602** (step **S114**) If the data block digests are equivalent, then the data block is dropped and the system proceeds to the next block (step **S114**). Once process software **602** receives the new data blocks, it sends the metadata for the data blocks to database server **603** to be cataloged in database catalog **604** (step **S115b**) and the data block and data block digest are forwarded to media server **605** to be stored in database **609** (step **S115b**).

The BTD technology provides a "forget object" feature. If an object that was previously stored ("remembered") is physically deleted from the object system, the object is only flagged as deleted in the database catalog. The object maps and data blocks in the database are not deleted because the user might want to "flashback" to a time prior to object deletion.

The BTD technology is also particularly useful for multi-user networks, wherein data is shared between users. Under such circumstances, the database, as described above, stores only one copy of each data block instance, and each user accesses the data block instance by indexing the stored data block instance, and references to the data block instance by multiple users can be tracked through the metadata. For example, if two users, "user#1" and "user#2" each have access to an object (for example, "object A"), and object A is broken down into data blocks (for example, "data blocks XYZ"), only one copy of data blocks XYZ is stored in the database. However, user#1 and user#2 can simultaneously access data blocks XYZ through indexing the data blocks. In addition, the metadata for data blocks XYZ can identify user#1 and user#2 as users who are accessing data blocks XYZ and indicate the times user#1 and user#2 accessed the data blocks XYZ.

The indexing feature of the database also facilitates object navigation, such as searching through the data for particular information or object. For example, if a user wants to find all of the "mp3" files in the backed up data, he or she can query the database to trigger a simple search through the attribute information (metadata) for "mp3" files. Object navigation is not only limited to structured data, such as data typically found in a relational database, but can also be performed with unstructured data, such as the text of a Word document.

Numerous additional modifications and variations of the present disclosure are possible in view of the above-teachings. It is therefore to be understood that within the scope of the appended claims, the present disclosure may be practiced other than as specifically described herein.

Additional variations may be apparent to one of ordinary skill in the art from reading U.S. provisional application Serial No. 60/573,586, filed May 21, 2004 and entitled "METHOD AND APPARATUS FOR STORAGE BACKUP".

## Claims

1. A method for restoring backup data from a database (609), said backup data being stored in the database (609) as a plurality of data blocks (B1-BN), each data block having one or more associated instances (52, 54, 56) and each instance having associated timestamp information, the method comprising:
receiving (S21) specification of a time to which data restoration is desired;
comparing (S23) the received specified time to timestamp information stored for each instance of each data block of the backup data in the database (609); and
retrieving (S25) a first instance (54) of a selected data bock (B7) of the backup data, if the first instance (54) has an associated timestamp at or earlier than the received specified time and no other instances (52, 56) corresponding to the selected data block (B7) have timestamps between the received specified time and the associated timestamp of the first instance (54).

2. The method of claim 1, wherein the timestamp information is retrieved from a database catalog (604).

3. The method of claim 1, wherein the backup data is retrieved from the database (609).

4. The method of claim 1, further comprising backing up the restored backup data to a secondary backup medium.

5. The method of claim 1, wherein the received specified time is the current time such that said step of retrieving (S25) retrieves an instance (56) of a data block (B7) having the most recent timestamp as compared to the other instances (52, 54) of the data block, the method further comprising:
restoring (S37) the selected instance (56) having the most recent timestamp.

6. The method of claim 5, further comprising, grouping each of the instances of data blocks with the most recent timestamp by object set, and ordering each instance of data block within each object set by block number.

7. A program storage device readable by a machine and tangibly embodying a program of instructions executable by the machine to perform, when executed on the machine the method claimed in claim 1 or 5.

8. A computer system comprising:
a processor; and
a program storage device in accordance with claim 7.

9. A computer data signal transmitted in one or more segments in a transmission medium which embodies instructions executable by a computer to perform the method claimed in claim 1 or 5.

10. An apparatus for restoring backup data from a database (609), said backup data being stored in the database (609) as a plurality of data blocks (B1-BN), each data block having one or more associated instances (52, 54, 56) and each instance having associated timestamp information, the system comprising:
means for receiving specification of a time to which data restoration is desired;
means for comparing the received specified time to timestamp information stored for each instance of each data block of the backup data in the database (609); and
means for retrieving a first instance (54) of a selected data block (B7) of the backup data, if the first instance (54) has an associated timestamp at or earlier than the received specified time and no other instances (52, 56) corresponding to the selected data block (B7) have timestamps between the received time and the associated timestamp of the first instance (54).

11. The apparatus of claim 10, wherein the specified time is the current time such that the means for retrieving is operable to retrieve an instance (56) of a data block (B7) having the most recent timestamp as compared to the other instances (52, 54) of the data block, the apparatus further comprising:
means for restoring the selected instance (56) having the most recent timestamp.

## Patentansprüche

1. Verwahren zum Wiederherstellen von Sicherungsdaten von einer Datenbank (609), wobei die Sicherungsdaten als mehrere Datenblöcke (B1 bis BN) in der Datenbank (609) gespeichert sind, wobei jeder Datenblock eine oder mehrere verknüpfte Instanzen (52, 54, 56) aufweist und jede Instanz verknüpfte Zeitstempelinformationen aufweist, wobei das Verfahren Folgendes umfasst:
Empfangen (S21) von Angaben einer Zeit, zu der die Datenwiederherstellung gewünscht wird;
Vergleichen (S23) der empfangenen angegebenen Zeit mit Zeitstempelinformationen, die für jede Instanz jedes Datenblocks der Sicherungsdaten in der Datenbank (609) gespeichert sind; und
Abfragen (S25) einer ersten Instanz (54) eines ausgewählten Datenblocks (B7) der Sicherungsdaten, wenn die erste Instanz (54) einen verknüpften Zeitstempel zu der oder früher als die empfangene/n angegebene/n Zeit aufweist und keine anderen Instanzen (52, 56), die dem ausgewählten Datenblock (B7) entsprechen, Zeitstempel zwischen der empfangenen angegebenen Zeit und dem verknüpften Zeitstempel der ersten Instanz (54) aufweisen.

2. Verfahren nach Anspruch 1, wobei die Zeitstempelinformationen von einem Datenbankkatalog (604) abgefragt werden.

3. Verfahren nach Anspruch 1, wobei die Sicherungsdaten von der Datenbank (609) abgefragt werden.

4. Verfahren nach Anspruch 1, das ferner das Sichern der wiederhergestellten Sicherungsdaten auf einem sekundären Sicherungsmedium umfasst.

5. Verfahren nach Anspruch 1, wobei die empfangene angegebene Zeit die aktuelle Zeit ist, derart, dass der Schritt des Abfragens (S25) eine Instanz (56) eines Datenblocks (B7) abfragt, die im Vergleich zu den anderen Instanzen (52, 54) des Datenblocks den neuesten Zeitstempel aufweist, wobei das Verfahren ferner Folgendes umfasst:
Wiederherstellen (S37) der ausgewählten Instanz (56), die den neuesten zeitstempel aufweist.

6. Verfahren nach Anspruch 5, das ferner das Gruppieren jeder der Instanzen von Datenblöcken mit dem neuesten Zeitstempel nach Objektmenge und das Ordnen jeder Datenblockinstanz innerhalb jeder Objektmenge nach Blocknummer umfasst.

7. Programmspeicher, der durch eine Maschine lesbar ist und greifbar ein Programm von Befehlen umfasst, die durch die Maschine ausgeführt werden können, um, wenn sie auf der Maschine ausgeführt werden, das in Anspruch 1 oder 5 beanspruchte Verfahren durchzuführen.

8. Computersystem, das Folgendes umfasst:
einen Prozessor; und
einen Programmspeicher nach Anspruch 7.

9. Computerdatensignal, das in einem oder mehreren Segmenten in einem Übertragungsmedium übertragen wird, das Befehle umfasst, die durch einen Computer ausgeführt werden können, um das in Anspruch 1 oder 5 beanspruchte Verfahren durchzuführen.

10. Vorrichtung zur Wiederherstellung von Sicherungsdaten von einer Datenbank (609), wobei die Sicherungsdaten als mehrere Datenblöcke (B1 bis BN) in der Datenbank (609) gespeichert sind, wobei jeder Datenblock eine oder mehrere verknüpfte Instanzen (52, 54, 56) aufweist und jede Instanz verknüpfte Zeitstempelinformationen aufweist, wobei das System Folgendes umfasst:
Mittel zum Empfangen von Angaben einer Zeit, zu der die Datenwiederherstellung gewünscht wird;
Mittel zum Vergleichen der empfangenen angegebenen Zeit mit Zeitstempelinformationen, die für jede Instanz jedes Datenblocks der Sicherungsdaten in der Datenbank (609) gespeichert sind; und
Mittel zum Abfragen einer ersten Instanz (54) eines ausgewählten Datenblocks (B7) der Sicherungsdaten, wenn die erste Instanz (54) einen verknüpften Zeitstempel zu der oder früher als die empfangene/n angegebene/n Zeit aufweist und keine anderen Instanzen (52, 56), die dem ausgewählten Datenblock (B7) entsprechen, Zeitstempel zwischen der empfangenen angegebenen Zeit und dem verknüpften Zeitstempel der ersten Instanz (54) aufweisen.

11. Vorrichtung nach Anspruch 10, wobei die angegebene Zeit die aktuelle Zeit ist, derart, dass das Mittel zum Abfragen betriebsfähig ist, um eine Instanz (56) eines Datenblocks (B7) abzufragen, die im Vergleich zu den anderen Instanzen (52, 54) des Datenblocks den neuesten Zeitstempel aufweist, wobei die Vorrichtung ferner Folgendes umfasst:
Mittel zum Wiederherstellen der ausgewählten Instanz (56), die den neuesten Zeitstempel aufweist.

## Revendications

1. Procédé pour restaurer des données de sauvegarde à partir d'une base de données (609), les données de sauvegarde étant stockées dans la base de données (609) sous la forme de plusieurs blocs de données (B1-BN), chaque bloc de données ayant une ou plusieurs instances associées (52, 54, 56), et chaque instance ayant des informations d'estampille associées, le procédé comprenant :
la réception (S21) d'une spécification d'une heure à laquelle une restauration des données est souhaitée ;
la comparaison (S23) de l'heure spécifiée reçue avec des informations d'estampille stockées pour chaque instance de chaque bloc de données des données de sauvegarde dans la base de données (609) ;
la récupération (S25) d'une première instance (54) d'un bloc de données (B7) sélectionné des données de sauvegarde si la première instance (54) a une estampille associée correspondant à l'heure ou avant l'heure spécifiée reçue et si aucune autre instance (52, 56) correspondant au bloc de données (B7) sélectionné n'a d'estampilles entre l'heure spécifiée reçue et l'estampille associée de la première instance (54).

2. Procédé de la revendication 1, selon lequel les informations d'estampille sont récupérées dans un catalogue de base de données (604).

3. Procédé de la revendication 1, selon lequel les données de sauvegarde sont récupérées dans la base de données (609).

4. Procédé de la revendication 1, comprenant également la sauvegarde des données de sauvegarde restaurées, dans un support de sauvegarde secondaire.

5. Procédé de la revendication 1, selon lequel l'heure spécifiée reçue est l'heure actuelle, de sorte que l'étape de récupération (S25) récupère une instance (56) d'un bloc de données (B7) qui a l'estampille la plus récente, comparée aux autres instances (52, 54) du bloc de données, le procédé comprenant également :
la restauration (S37) de l'instance (56) sélectionnée qui a l'estampille la plus récente.

6. Procédé de la revendication 5, comprenant également le groupement de chacune des instances de blocs de données avec l'estampille la plus récente, par série d'objets, et le classement de chaque instance de bloc de données à l'intérieur de chaque série d'objets par numéro de bloc.

7. Dispositif de stockage de programme apte à être lu par une machine et contenant de manière tangible un programme d'instructions exécutable par la machine pour mettre en oeuvre, quand il est exécuté sur la machine, le procédé revendiqué dans la revendication 1 ou 5.

8. Système informatique comprenant :
un processeur ; et
un dispositif de stockage de programme selon la revendication 7.

9. Signal de données informatiques transmis en un ou plusieurs segments dans un support de transmission qui contient des instructions exécutables par un ordinateur pour mettre en oeuvre le procédé revendiqué dans la revendication 1 ou 5.

10. Appareil pour restaurer des données de sauvegarde à partir d'une base de données (609), les données de sauvegarde étant stockées dans la base de données (609) sous la forme de plusieurs blocs de données (B1-BN), chaque bloc de données ayant une ou plusieurs instances associées (52, 54, 56), et chaque instance ayant des informations d'estampille associées, le procédé comprenant :
des moyens pour recevoir une spécification d'une heure à laquelle une restauration des données est souhaitée ;
des moyens pour comparer l'heure spécifiée reçue avec des informations d'estampille stockées pour chaque instance de chaque bloc de données des données de sauvegarde dans la base de données (609) ;
des moyens pour récupérer une première instance (54) d'un bloc de données (B7) sélectionné des données de sauvegarde si la première instance (54) a une estampille associée correspondant à l'heure ou avant l'heure spécifiée reçue et si aucune autre instance (52, 56) correspondant au bloc de données (B7) sélectionné n'a d'estampilles entre l'heure spécifiée reçue et l'estampille associée de la première instance (54).

11. Appareil de la revendication 10, dans lequel l'heure spécifiée est l'heure actuelle, de sorte que les moyens de récupération sont aptes à récupérer une instance (56) d'un bloc de données (B7) qui a l'estampille la plus récente, comparée aux autres instances (52, 54) du bloc de données, l'appareil comprenant également :
des moyens pour restaurer l'instance (56) sélectionnée qui a l'estampille la plus récente.
